# EUROPÄISCHE PATENTSCHRIFT

(11) **EP 3 556 271 B1**
(45) Veröffentlichungstag und Bekanntmachung des Hinweises auf die Patenterteilung: **12.05.2021**
(21) Anmeldenummer: 18167479.7
(22) Anmeldetag: 16.04.2018
(51) Int. Cl.: A47J 47/12, A47G 19/32

(54) **BROTKASTEN MIT HERAUSSCHIEBBAREM TRÄGER**
BREAD BOX WITH SLIDING TRAY
BOX POUR PRODUITS DE BOULANGERIE

(43) Veröffentlichungstag der Anmeldung: 23.10.2019
(73) Patentinhaber: Maschinen Service Judaschke, 51570 Windeck (DE)
(72) Erfinder: Wolff-Judaschke, Sabine, 51570 Windeck (DE)
(74) Vertreter: Hannke, Christian

(56) Entgegenhaltungen:
- CH-A- 188 581

## Beschreibung

Die Erfindung betrifft eine Regalvorrichtung für Backwaren, insbesondere geschnittenes Brot, zur Bereitstellung von Backwaren, insbesondere im gastronomischen Bereich. Dabei weist die Regalvorrichtung eine Basisfläche, zumindest zwei Wandelemente, zumindest ein Rückseitenelement, zumindest ein Deckenelement, zumindest eine Öffnung und zumindest eine Verschlussplatte zum Verschließen der Öffnung auf und die Wandelemente spannen zusammen mit dem Basiselement, dem Deckenelement und dem Rückseitenelement einen Raum auf, in welchem die Backwaren vorhaltbar sind. Eine derartige Regalvorrichtung ist beispielsweise aus der CH 188 581 bekannt.

In Hotel- oder Gastronomiebetrieben, welche regelmäßig Buffets für Frühstück oder auch Mittags- oder Abendmahlzeiten anbieten, besteht häufig das Problem Backwaren, wie z.B. Brot oder Baguette, hygienisch, appetitlich und frisch anzubieten.

Da Backwaren, wie z.B. Brot, in geschnittener Form schnell austrocknen, wird die Backware häufig in ungeschnittener Form am Buffet vorgehalten. Dabei wird die Backware meistens auf einem Schneidebrett mit einem Messer präsentiert, wobei die Gäste selbst Scheiben von der Backware abschneiden können. Damit die Backware dabei nicht von allem Gästen mit bloßen Händen berührt wird, wird häufig eine Serviette zum Umwickeln oder Abdecken der Backware, zumindest in dem Bereich in dem die Gäste die Backware während des Schneidens festhalten, bereit gestellt.

In der Praxis ist diese Vorgehensweise jedoch nicht zufriedenstellend. Zum einen kann die Serviette leicht weggelassen oder gewendet werden und zum anderen besteht zu keiner Zeit ein Spuckschutz für die Backware, sodass die Hygiene hier nicht gewährleistet ist. Auch schneiden die Gäste häufig schiefe oder krumme Scheiben von der Backware ab, oder quetschen diese. Zusammen mit der unvermeidbaren Krümelbildung beim Abschneiden von Scheiben führt dies dazu, dass eine derart präsentierte Backware schnell unansehnlich wird und unappetitlich wirkt.

Aufgabe der vorliegenden Erfindung ist es daher eine Vorrichtung bereit zu stellen, mit welcher Backwaren in geschnittener Form, z.B. an einem Büffet, in einfacher und appetitlicher Weise vorgehalten werden können ohne auszutrocknen und unter steter Gewährleistung der Hygiene.

Diese Aufgabe wird gelöst durch eine Regalvorrichtung für Backwaren, insbesondere geschnittenes Brot, zur Bereitstellung von Backwaren, insbesondere im gastronomischen Bereich. Dabei weist die Regalvorrichtung eine Basisfläche, zumindest zwei Wandelemente, zumindest ein Rückseitenelement, zumindest ein Deckenelement, zumindest eine Öffnung und zumindest eine Verschlussplatte zum Verschließen der Öffnung auf und die Wandelemente spannen zusammen mit dem Basiselement, dem Deckenelement und dem Rückseitenelement einen Raum auf, in welchem die Backwaren vorhaltbar sind. Die Erfindung ist dadurch gekennzeichnet, dass die Regalvorrichtung zumindest ein Schubelement, auf welchem die Backware anordenbar ist, und zumindest ein Verbindungselement und ein Bewegungswandlungselement umfasst, wobei das Schubelement mit der Verschlussplatte durch das Verbindungselement und das Bewegungswandlungselement verbunden ist, so dass durch Aufschwenken der Verschlussplatte in Verschwenkungsrichtung das Verbindungselement und das Bewegungswandlungselement betätigbar sind und mit diesen die Drehbewegung der Verschlussplatte in Verschwenkungsrichtung in eine Schubbewegung des Schubelements durch die Öffnung der Regalvorrichtung aus dem Raum der Regalvorrichtung in einer Verschieberichtung umwandelbar ist.

Unter dem Begriff Backwaren sind beispielsweise Brotscheiben, Brötchen, Toastbrotscheiben, Brezeln, Croissants oder auch Kuchenscheiben oder Stücke zu verstehen. Aber auch jedes andere Lebensmittel, welches hygienisch präsentiert werden soll und gleichzeitig vor Umwelt oder Klimatisierungseinflüssen geschützt werden soll bzw. in einem bestimmten Klima aufzubewahren ist, ist mit der Regalvorrichtung verwendbar und daher begrifflich in der Bezeichnung Backware eingeschlossen.

Die Basisfläche, die Wandelemente, das Rückseitenelement und das Deckenelement bestehen bevorzugt aus einem lebensmittelbeständigen Material, welches leicht zu reinigen ist. Bevorzugte Materialien sind beispielsweise Edelstahl, Holz oder Kunststoff oder jedes andere, dem Fachmann bekannte Material, welches für diesen Zweck geeignet ist. Sämtliche Elemente können als ebene Platten ausgeführt sein. Bevorzugt ist das Rückseitenelement gebogen ausgeführt, sodass die Regalvorrichtung an ihrer Rückseite konvex, bzw. nach außen gewölbt ist. Die Wandelemente weisen in diesem Fall an der Seite, mit welcher sie an das Rückseitenelement grenzen, eine komplementär zur Wölbung des Rückseitenelements geformte Rundung auf.

Die Öffnung erstreckt sich bevorzugt über die gesamte Seite der Regalvorrichtung, welche gegenüber und parallel zum Rückseitenelement angeordnet ist. Die Verschlussplatte zum Verschließen der Öffnung besteht bevorzugt aus einem durchsichtigen oder zumindest teilweise transparenten Material, sodass auch im geschlossenen Zustand der Inhalt, insbesondere die Backware, durch die Verschlussplatte sichtbar ist. Bevorzugt weist die Verschlussplatte einen Griff zum einfachen Öffnen der Regalvorrichtung auf.

Gemäß zumindest einer weiteren Ausführungsform ist das Verbindungselement als Hebelsystem mit zumindest einem ersten Hebel, zumindest einem zweiten Hebel und zumindest einem dritten Hebel ausgeführt und das Bewegungswandlungselement als zumindest zwei Drehpunkte zwischen den drei Hebeln des Hebelsystems ausgeführt, sodass die Hebel gegeneinander verschwenkbar sind, wobei das Schubelement mit der Verschlussplatte durch das Hebelsystem verbunden ist, so dass durch Aufschwenken der Verschlussplatte in Verschwenkungsrichtung das Hebelsystem betätigbar ist und mit diesem durch Verschwenkung der Hebel zueinander das Schubelement durch die Öffnung der Regalvorrichtung aus dem Raum der Regalvorrichtung in einer Verschieberichtung herausschiebbar ist.

Das Hebelsystem verbindet die Verschlussplatte mechanisch mit dem Schubelement, sodass eine rotatorische Bewegung der Verschlussplatte eine translatorische Bewegung des Schubelements erzeugt. Das Hebelsystem besteht dabei aus mindestens drei Hebeln, mit welchen die rotatorische Bewegung der Verschlussplatte, durch Verschwenkung der Hebel zueinander, in eine translatorische Bewegung des Schubelements umwandelbar ist.

Das Schubelement ist bevorzugt im unteren Bereich der Regalvorrichtung angeordnet. Bevorzugt ist das Schubelement parallel zur Basisfläche angeordnet. Das Schubelement ist durch Schubschienenelemente, welche an den Wandelementen angeordnet sind, parallel zur Basisfläche in der Verschieberichtung, welche bevorzugt parallel zu den Wandelementen, dem Basiselement und dem Deckenelement angeordnet ist, verschiebbar. Die Schubschienenelemente sind bevorzugt parallel zur Verschieberichtung angeordnet. Bevorzugt ist das Schubelement als ebene Platte ausgeführt, ähnlich einem ausziehbaren Regalbrett. Auf dem Schubelement ist die Backware angeordnet, sodass bei Herausschieben des Schubelements aus dem Raum der Regalvorrichtung auch die Backware aus dem Raum der Regalvorrichtung herausgeschoben wird.

Im herausgeschobenen Zustand ist die Backware besonders einfach aus der Regalvorrichtung entnehmbar, beispielsweise mit Hilfe einer Zange. Bevorzugt arretiert die Verschlussplatte beim Aufschwenken, beispielsweise durch ein Federelement, in der Aufgeschwenkten Position. Dies ist besonders vorteilhaft, da der Benutzer die Klappe nicht im aufgeschwenkten Zustand aufhalten muss um die Backware entnehmen zu können. Dies ist besonders wichtig, wenn die Regalvorrichtung im Rahmen eines Buffets verwendet wird. Typischer Weise haben Benutzer an einem Buffet in der einen Hand ihren Teller und müssen daher sämtliche Speisen vom Buffet einhändig entnehmen können. Mit der Arretierung der Verschlussplatte im Aufgeschwenkten Zustand ist eine einhändige Bedienung der Regalvorrichtung problemlos möglich.

Gemäß zumindest einer weiteren Ausführungsform ist durch Zuschwenken der Verschlussplatte entgegen der Verschwenkungsrichtung das Verbindungselement und das Bewegungswandlungselement in entgegengesetzter Weise betätigbar so dass bei Zuschwenken der Verschlussplatte entgegen der Verschwenkungsrichtung das Schubelement durch die Öffnung der Regalvorrichtung in den Raum der Regalvorrichtung entgegen der Verschieberichtung hineinschiebbar ist.

Im geschlossenen Zustand ist die Öffnung der Regalvorrichtung durch die Verschlussplatte verschlossen und die Backware befindet sich im geschlossenen Raum der Regalvorrichtung. Durch die dadurch begrenzte Luftzirkulation, wird die Backware wirkungsvoll vor dem Austrocknen geschützt. Bei Verwendung einer Arretierung, beispielsweise einem Federelement, ist es denkbar, dass beim Zuschwenken eine Mindestzuschwenkkraft aufgebracht werden muss um die Arretierung zu lösen.

Gemäß zumindest einer weiteren Ausführungsform umfasst die Regalvorrichtung eine Schließvorrichtung, welche eine Zeitverzögerungseinheit aufweist, mit welcher das Verbindungselement und das Bewegungswandlungselement automatisch in entgegengesetzter Weise betätigbar sind, sodass das Schubelement durch die Öffnung der Regalvorrichtung in den Raum der Regalvorrichtung entgegen der Verschieberichtung hineinschiebbar ist und die Verschlussplatte zuschwenkbar ist.

Die Schließvorrichtung kann dabei als eine mechanische oder elektrische Vorrichtung ausgeführt sein. Bevorzugt arretiert die Schließvorrichtung die Verschlussplatte beim Öffnen in ihrer geöffneten Position. Nach einer Offenhaltezeit, welche bevorzugt einstellbar ist, löst die Zeitverzögerungseinheit die arretierte Verschlussplatte, sodass diese automatisch in entgegengesetzter Weise betätigt wird. Die automatische Betätigung kann beispielsweise durch die Wirkung der Schwerkraft erfolgen, oder auch durch eine Feder, welche bevorzugt beim Öffnen gespannt wird, oder auch elektrisch. Bevorzugt umfass die Schließvorrichtung eine Dämpfungseinheit, welche die Schließbewegung verlangsamt. Dadurch wird verhindert, dass die Verschlussplatte plötzlich und schnell zufällt und Benutzer z.B. ihre Hände in der Regalvorrichtung einklemmen könnten.

Gemäß zumindest einer weiteren Ausführungsform ist die Verschlussplatte als Klappe ausgeführt, welche mittels einer Rotation in der Verschwenkungsrichtung nach vorne-oben aufschwenkbar ist, wobei die Verschieberichtung einer Bewegung nach vorne entspricht, und deren Drehachse horizontal und quer zur Verschieberichtung sowie im oberen Bereich der Klappe angeordnet ist.

Die als Klappe ausgeführte Verschlussplatte ist bevorzugt mit Scharnieren am Deckenelement befestigt. Bevorzugt weist die Verschlussplatte zumindest zwei Scharniere auf, um ein Verkanten der Verschlussplatte zu verhindern. Dabei verläuft die Drehachse der Verschlussplatte durch die Drehpunkte der Scharniere. Bevorzugt sind die Scharniere am oberen Rand der Verschlussplatte angeordnet, welcher am Deckenelement angeordnet ist. Der Gripp der Verschlussplatte ist bevorzugt im unteren Bereich der Verschlussplatte angeordnet, nahe des Randes, welcher am Basiselement angeordnet ist. Dadurch wird ein möglichst großer Hebel zum Aufschwenken der Klappe erreicht, sodass das Aufschwenken möglichst leichtgängig erfolgt.

Gemäß zumindest einer weiteren Ausführungsform ist ein Anfangspunkt des ersten Hebels an einem ersten Befestigungspunkt im oberen Bereich der Verschlussplatte befestigt, ein Endpunkt des ersten Hebels mit einem Anfangspunkt des zweiten Hebels drehbar verbunden, ein Endpunkt des zweiten Hebels mit einem Anfangspunkt des dritten Hebels drehbar verbunden und ein Endpunkt des dritten Hebels drehbar an einem zweiten Befestigungspunkt an der zum Rückseitenelement ausgerichteten Seite des Schubelements befestigt. Dabei sind der erste, zweite und dritte Hebel jeweils um eine fiktive Schwenkachse rotierbar, welche parallel zur Drehachse der Verschlussplatte angeordnet sind.

Auf diese Weise sind die Hebel, ähnlich einem Zollstock, fortlaufend miteinander verbunden. Die Hebel sind somit bevorzugt in Reihe angeordnet. Durch die Verbindung des ersten Hebels mit der Verschlussplatte und des dritten Hebels mit dem Schubelement, sind die Verschlussplatte und das Schubelement mechanisch verbunden. Bei Betätigung des Hebelsystems werden die Hebel zueinander verschwenkt. Dabei dreht sich jeder Hebel auf einer gedachten Kreisbahn um eine gedachte Drehachse. Die Drehachsen sämtlicher Hebel sind dabei senkrecht zur Verschieberichtung und parallel zur Drehachse der Verschlussplatte angeordnet. Die Lage der gedachten Drehachsen hängt dabei von der Anzahl der Hebel zwischen dem ersten und zweiten Befestigungspunkt ab, sowie von der Länge der Hebel und dem Längenverhältnis der Hebel zueinander.

Bevorzugt sind die Hebel in ihrer Form an das Rückseitenelement angepasst. Bevorzugt sind zumindest zwei Hebel in Richtung ihrer jeweiligen Drehrichtung gekrümmt ausgeführt. Bevorzugt ist der Krümmungsradius ähnlich oder gleich dem Krümmungsradius des Rückseitenelements ausgewählt, sodass die Hebel im Raum der Regalvorrichtung möglichst platzsparend anordenbar sind.

Gemäß zumindest einer weiteren Ausführungsform umfasst das Hebelsystem zwei erste, zwei zweite und zwei dritte Hebel, wobei die ersten Hebel parallel zueinander ausgerichtet sind, mit ihrem jeweiligen Anfangspunkt an jeweils einem ersten Befestigungspunkt im oberen Bereich der Verschlussplatte befestigt sind, die zweiten und dritten Hebel jeweils ebenfalls parallel zueinander ausgerichtet sind und die Endpunkte der zwei dritten Hebel drehbar an jeweils einem zweiten Befestigungspunkt an der zum Rückseitenelement ausgerichteten Seite des Schubelements befestigt sind.

In dieser Ausführungsform besteht das Hebelsystem somit aus zwei parallel angeordneten Hebelreihen mit jeweils einem ersten, zweiten und dritten Hebel. Dabei sind beide Hebelreihen bevorzugt baugleich. Dies bedeutet, dass die Anzahl der Hebel, ihre Abmessungen und ihre Anordnung in beiden Hebelreihen gleich sind. Beide Hebelreihen weisen bevorzugt dieselbe Funktion auf. Die Verwendung von zwei parallelen Hebelreihen verhindert ein Verdrehen oder Verkanten der Verschlussplatte und/oder des Schubelements während der Betätigung. Somit wird ein klemmfreier Ablauf des Auf- und Zuschwenkens gewährleistet. Bevorzugt ist eine der Hebelreihen nahe eines linken Wandelements und eine der Hebelreihen nahe des rechten Wandelements der Regalvorrichtung angeordnet.

Gemäß zumindest einer weiteren Ausführungsform weist das Hebelsystem weiterhin zumindest einen vierten Hebel und zumindest einen fünften Hebel auf, wobei ein Anfangspunkt des vierten Hebels mit dem Endpunkt des dritten Hebels drehbar verbunden ist, ein Endpunkt des vierten Hebels mit einem Anfangspunkt des fünften Hebels drehbar verbunden ist und ein Endpunkt des fünften Hebels drehbar am zweiten Befestigungspunkt des Schubelements befestigt ist.

Die Verwendung von mehr als drei Hebeln pro Hebelreihe bewirkt ein noch leichtgängigeres Betätigen des Hebelsystems. Auch kann das Hebelsystem durch Verwendung von mehr als drei Hebeln pro Hebelreihe und der damit verbundenen, höheren Anzahl von Drehpunkten platzsparender im Raum der Regalvorrichtung angeordnet werden. Dabei ist die jeweilige Länge sämtlicher Hebel an die verwendete Anzahl von Hebeln anzupassen, sodass die Rotationsbewegung der Verschlussklappe so effizient wie möglich in eine Translationsbewegung des Schubelements umgewandelt wird.

Gemäß zumindest einer weiteren Ausführungsform ist das Verbindungselement als Seilzugsystem ausgeführt, welches zumindest ein Seilelement sowie zumindest einen ersten und zweiten Befestigungspunkt umfasst, und das Bewegungswandlungselement als zumindest ein Seilhüllenelement und zumindest ein Umlenkrollenelement ausgeführt, wobei das Seilelement, welches am ersten Befestigungspunkt im oberen Bereich an der Verschlussplatte und am zweiten Befestigungspunkt an der Unterseite des Schubelements befestigt ist, in dem Seilhüllenelement, welches in vertikaler Richtung nahe dem Rückseitenelement angeordnet ist, führbar ist und mit dem Umlenkrollenelement, welches im geschlossenen Zustand der Regalvorrichtung nahe dem vorderen Ende der Unterseite des Schubelements angeordnet ist, umlenkbar ist, sodass bei Aufschwenken der Verschlussplatte in Verschwenkungsrichtung das Seilelement durch das Seilhüllenelement in Richtung eines oberen Endes des Seilhüllenelements bewegbar ist und, mit Hilfe des Umlenkrollenelements und der Bewegung des Seilelements, das Schubelement in Verschieberichtung ausschiebbar ist.

Bevorzugt weist die Regalvorrichtung zwei gleiche Seilzugsysteme auf, welche parallel zueinander angeordnet sind. Bevorzugt ist jeweils ein Seilzugsystem nahe jeweils einem Seitenelement angeordnet, sodass ein Verkanten des Schubelements beim Ausschieben verhindert wird. Bevorzugt ist das Seilhüllenelement am Rückseitenelement und/oder an einem Seitenelement befestigbar. Bevorzugt weist das Seilhüllenelement an seinen Enden Endkappenelemente auf, mit welchen das Seilhüllenelement am Rückseitenelement und/oder an einem Seitenelement befestigbar ist. Bevorzugt weist die Regalvorrichtung in dieser Ausführungsform die zuvor beschriebene Schließvorrichtung auf, mit welcher das Schubelement einschiebbar ist und dabei durch umgekehrte Betätigung des Seilzugsystems die Verschlussplatte zuschwenkbar ist.

Des Weiteren ist es denkbar, dass anstatt eines Seilzug- oder Hebelsystems ein Federsystem verwendet wird.

Erfindungsgemäß ist die als ebene Klappe ausgeführte Verschlussplatte im aufgeschwenkten, geöffneten Zustand derart parallel oder in einem Winkel zu dem Schubelement ausgerichtet, dass sie das Schubelement in vertikaler Richtung vollumfänglich überdeckt.

Im geöffneten Zustand ist die Verschlussplatte somit über der Backware angeordnet. Dadurch dient die Verschlussplatte im geöffneten Zustand als Spuckschutz für die Backware. Die Verschlussplatte ist dabei genau parallel zum Schubelement angeordnet, oder auch in einem Winkel zum Schubelement. Bevorzugt ist der im geschlossenen Zustand untere Rand der Verschlussplatte im geöffneten Zustand unterhalb des im geschlossenen Zustand oberen Rands der Verschlussplatte angeordnet. Die Verschlussplatte stellt somit im geöffneten, aufgeschwenkten Zustand eine in Richtung der Verschieberichtung abfallende Ebene dar. In anderen Worten, ist die Verschlussplatte im aufgeschwenkten Zustand bevorzugt zum vor der Regalvorrichtung stehenden Benutzer hin geneigt. Dadurch ist der Spuckschutz für die Backware besonders effizient. Der Spuckschutz verhindert, dass ein Benutzer bei der Entnahme von Backwaren aus der Regalvorrichtung auf die verbliebenen Backwaren, bzw. Teile hiervor, spucken, niesen oder husten kann. So wird die Hygiene der verbliebenen Backwaren in der Regalvorrichtung trotz mehrmaligem Öffnen gewährleistet.

Gemäß zumindest einer weiteren Ausführungsform ist an dem Schubelement ein Backwarenhalteelement anordenbar.

Bevorzugt ist das Backwarenhalteelement als Kasten, Korb, Teller, Tablett ausgeführt. Das Backwarenhalteelement besteht bevorzugt aus einem festen, undurchbrochenen Material, wie z.B. Metall, Kunststoff oder auch Holz, welches bevorzugt lebensmittelecht und leicht reinigbar ist. Bevorzugt weist das Backwarenhalteelement einen erhöhten Rand an seiner Grundfläche auf, sodass Krümel nicht aus dem Backwarenhalteelement heraus oder von diesem herunter fallen in die Regalvorrichtung fallen und diese verschmutzen. Durch Anordnung der Backwaren in einem Backwarenhalteelement können einzelne Backwaren oder Scheiben hiervon beim Öffnen oder Schließen der Regalvorrichtung nicht vom Schubelement herunterfallen.

Bevorzugt wird die Backware in einer Schneidemaschine geschnitten und dann direkt im Backwarenhalteelement platziert. Im Backwarenhalteelement kann die geschnittene Backware dann in einfacher Weise zu der Regalvorrichtung transportiert werden. An Anschluss kann das Backwarenhalteelement mit der geschnittenen Backware schnell und einfach auf dem Schubelement angeordnet werden. Dabei ist es denkbar, dass das Backwarenhalteelement einfach auf dem Schubelement abgestellt wird. Ebenfalls wäre es denkbar, dass das Schubelement eine flache Vertiefung in gleicher Form und Größe wie die Grundfläche des Backwarenhalteelements aufweist oder auch Erhöhungen derart auf der Oberseite des Schubelements angeordnet sind, dass das Backwarenhalteelement zwischen diesen platziert werden kann. Auf diese Weise wird ein Verrutschen des Backwarenhalteelements auf dem Schubelement verhindert. Auch ist es denkbar, dass die Unterseite der Backwarenhaltevorrichtung beispielsweise eine gummierte oder anderweitig rutschhemmende Beschichtung aufweist, sodass ein stabiler Stand des Backwarenhalteelements auf dem Schubelement zu jeder Zeit gewährleistet ist.

Durch Austausch des Backwarenhalteelements mit einem Backwarenhalteelement mit einer anderen Backware ist die Backware in der Regalvorrichtung auf einfache und schnelle Weise austauschbar, ohne dass die Regalvorrichtung aufwendig gereinigt werden muss. Bevorzugt werden daher mehrere Backwarenhalteelemente im Austausch miteinander mit der Regalvorrichtung verwendet.

Gemäß zumindest einer weiteren Ausführungsform umfasst die Regalvorrichtung eine Klimatisierungsvorrichtung.

Die Klimatisierungsvorrichtung ist bevorzugt mit dem Innenraum der Regalvorrichtung verbunden, sodass ein Gasaustausch zwischen Klimatisierungsvorrichtung und dem Innenraum der Regalvorrichtung möglich ist. Die Klimatisierungsvorrichtung ist somit bevorzugt in der Lage in dem Innenraum der Regalvorrichtung die Parameter Temperatur und Luftfeuchtigkeit oder auch weitere Parameter einzustellen, also den Innenraum zu klimatisieren. Damit werden in der Regalvorrichtung vorgehaltene Backwaren besonders wirksam vor dem Austrocknen geschützt. Bevorzugt ist die Klimatisierungsvorrichtung mit einem Schlauchelement mit der Regalvorrichtung verbunden. Dabei findet der Gasaustausch bevorzugt durch das Schlauchelement statt. Bevorzugt ist das Schlauchelement am Rückseitenelement mit der Regalvorrichtung verbunden.

Gemäß zumindest einer weiteren Ausführungsform umfasst die Regalvorrichtung waagrechte und/oder senkrechte Trennwände, mit welchen der aufgespannte Raum in mehrere Teilräume aufteilbar ist und jeder Teilraum jeweils zumindest eine Öffnung mit jeweils zumindest einer Verschlussplatte, zumindest ein Schubelement sowie zumindest ein Verbindungselement und ein Bewegungswandlungselement aufweist, mit welchen jeder Teilraum einzeln öffen- und schließbar ist.

In dieser Ausführungsform weist die Regalvorrichtung mehrere Regalfächer auf, in welchen jeweils Backwaren vorhaltbar sind. Diese Ausführungsform ist besonders bevorzugt, wenn mehrere Sorten Backwaren gleichzeitig präsentiert werden sollen. Die Anordnung der Fächer ist bevorzugt nebeneinander, aber auch eine Anordnung übereinander oder neben- und übereinander ist denkbar. Jedes Regalfach weist bevorzugt eine eigene Verschlussplatte, ein eigenes Schubelement und ein eigenes Verbindungselement und ein Bewegungswandlungselement auf, sodass jedes Regalfach einzeln und unabhängig von den anderen Regalfächern öffen- und schließbar ist und die jeweils vorgehaltenen Backwaren jeweils einzeln und unabhängig voneinander entnehmbar sind. Des Weiteren ist es denkbar, dass mehrere einzelne Regalvorrichtungen an ihren Seitenelementen miteinander verbindbar sind und so eine zusammengesetzte Regalvorrichtung erzeugbar ist, welche ebenfalls mehrere, einzeln öffen- und schließbare Teilräume oder auch Innenräume aufweist, in welchen Backwaren vorhaltbar und unabhängig voneinander entnehmbar sind.

Des Weiteren ist es denkbar, dass die Regalvorrichtung ein elektronisches Steuerungssystem, umfassend einen Sensor, einen Motor, ein, als eine Steuereinheit ausgeführtes, Bewegungswandlungselement sowie ein, als eine erste und zweite Verbindungseinheit ausgeführtes, Verbindungselement, auf, wobei der Sensor an der Verschlussplatte angeordnet ist und durch Aufschwenken und/oder Zuschwenken der Verschlussplatte Sensorsignale generierbar sind, welche mit Hilfe der ersten Verbindungseinheit an die Steuereinheit weiterleitbar sind, wobei in der Steuereinheit Motorsteuersignale generierbar sind, welche mit Hilfe der zweiten Verbindungseinheit an den Motor weiterleitbar sind, wobei der Motor am Schubelement angeordnet ist und mit den Motorsteuersignalen steuerbar und das Schubelement mit dem Motor aus- und/oder einschiebbar ist.

Der Sensor ist dabei bevorzugt als Bewegungssensor, insbesondere, aber nicht ausschließlich, als Gyrosensor, Drehwinkelsensor oder Lagesensor ausgeführt. Der Motor ist bevorzugt als Elektromotor ausgeführt. Die Steuereinheit ist bevorzugt eine Prozessoreinheit und umfasst bevorzugt weiterhin zumindest eine Speichereinheit. Die Verbindungseinheiten sind bevorzugt als physikalische Verbindungen, insbesondere Kabel, ausgeführt, aber auch eine drahtlose Übertragung der Signale ist denkbar, beispielsweise über RFID, Bluetooth, W-LAN, Funk, optische Kommunikation oder andere drahtlose Übertragungstechniken.
In dieser Ausführungsform ist kein mechanisches Hebelsystem mehr notwendig. Das Ausschieben des Schubelements bei Aufschwenken der Verschlussplatte und das Einschieben des Schubelements bei Zuschwenken der Verschlussplatte erfolgen über eine rein elektrische Steuerung. Die Stromversorgung erfolgt bevorzugt über eine Batterie oder einen Akku, aber auch eine stationäre Stromversorgung über einen Stecker und ein Kabel am haushaltsüblichen Niederspannungsnetz ist denkbar.

Die Aufgabe wird auch durch ein Verfahren zum Entnehmen von Backwaren, insbesondere geschnittenes Brot, aus einer Regalvorrichtung, wobei die Regalvorrichtung eine Basisfläche, zumindest zwei Wandelemente, zumindest ein Rückseitenelement, zumindest ein Deckenelement, zumindest eine Öffnung und zumindest eine Verschlussplatte zum Verschließen der Öffnung aufweist, die Wandelemente zusammen mit dem Basiselement, dem Deckenelement und dem Rückseitenelement einen Raum aufspannen in welchem die Backwaren vorhaltbar sind und die Regalvorrichtung ein Schubelement, ein Verbindungselement und ein Bewegungswandlungselement umfasst,, wobei die Backware auf dem Schubelement angeordnet ist, gelöst, umfassend die Schritte:
- Aufschwenken der Verschlussplatte der Öffnung der Regalvorrichtung in Verschwenkungsrichtung mit, durch das Verbindungselement und das Bewegungswandlungselement bedingtem, gleichzeitigem Herausschieben des Schubelements aus dem Raum der Regalvorrichtung;
- Entnehmen der am zuvor herausgeschobenen Schubelement angeordneten Backware oder Teilen der Backware;
- Zuschwenken der Verschlussplatte der Öffnung der Regalvorrichtung entgegen der Verschwenkungsrichtung mit durch das Verbindungselement und das Bewegungswandlungselement bedingtem, gleichzeitigem Hineinschieben des Schubelements in den Raum der Regalvorrichtung.
Dabei ist die Backware bevorzugt vor dem Aufschwenken und nach dem Zuschwenken im Raum der Regalvorrichtung eingeschlossen und wird somit vor dem Austrocknen geschützt.

Gemäß zumindest einer weiteren Ausführungsform weist die Regalvorrichtung weiterhin eine Schließvorrichtung auf und an Stelle des letzten Verfahrensschritts betätigt die Schließvorrichtung das Verbindungselement und das Bewegungswandlungselement automatisch in entgegengesetzter Weise mit dadurch bedingtem, gleichzeitigen Zuschwenken der Verschlussplatte sowie gleichzeitigem Hineinschieben des Schubelements in den Raum der Regalvorrichtung.

Diese Ausführungsform ist besonders vorteilhaft, da die Regalvorrichtung automatisch und nach einer gewissen Zeitspanne nach dem Aufschwenken wieder geschlossen wird. Somit muss der Benutzer nach dem Entnehmen der Backware nicht mehr daran denken, die Verschlussplatte wieder zuzuschwenken um ein Austrocknen der Backwaren zu verhindern.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.
In den Figuren zeigen:
- Fig. 1: eine perspektivische Übersichtsdarstellung der Regalvorrichtung von schräg vorne;
- Fig. 2: eine perspektivische Übersichtsdarstellung der Regalvorrichtung von schräg hinten;
- Fig. 3: eine Detaildarstellung des Hebelsystems in Seitenansicht mit offener Seitenfläche;
- Fig. 4: eine perspektivische Detaildarstellung des Hebelsystems mit offener Seitenfläche;
- Fig. 5: eine perspektivische Darstellung der Regalvorrichtung mit zusätzlicher Darstellung der Backwarenhaltevorrichtung;
- Fig. 6: eine schematische Seitendarstellung der Regalvorrichtung mit Seilzugsystem;
- Fig. 7: eine Prinzipskizze des elektronischen Steuerungssystems.

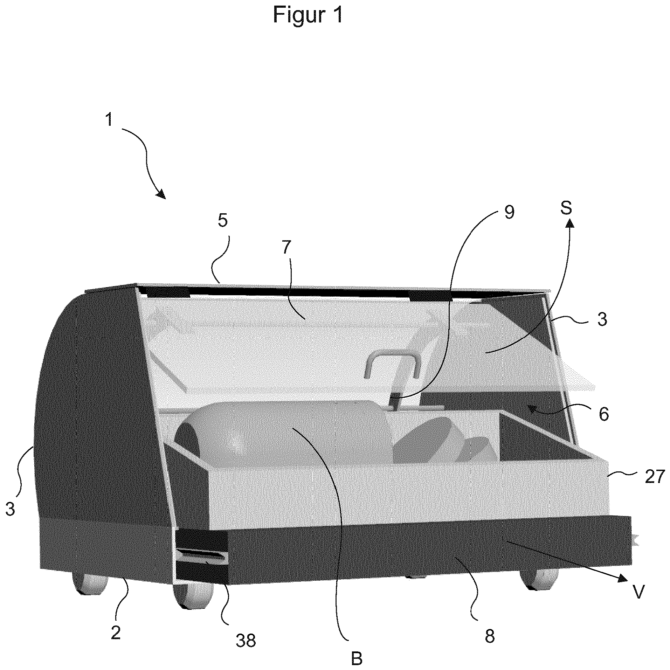

Figur 1 zeigt eine Ausführungsform der erfindungsgemäßen Regalvorrichtung 1. Das Basiselement 2 stellt die Unterseite, die Seitenelemente 3 die Seitenwände und das Deckenelement 5 die Oberseite der Regalvorrichtung 1 dar. Die Rückseite wird vom Rückseitenelement 4 gebildet. Die Vorderseite der Regalvorrichtung 1 ist offen und mit der Verschlussplatte 7 verschließbar. Die Verschlussplatte weist einen Griff auf. Im unteren Bereich der Regalvorrichtung 1, direkt über dem Basiselement 2, ist das Schubelement 8 angeordnet. Das Schubelement 8 ist mit den Schubschienenelementen 38 an den Seitenelementen 3 verbunden. Das Schubelement 8 ist in Verschieberichtung V und in entgegengesetzter Richtung verschiebbar. Die Verschlussplatte 7 ist in Schwenkrichtung S aufschwenkbar und entgegen der Schwenkrichtung S zuschwenkbar. Die Verschlussplatte 7 und das Schubelement 8 sind über das in dieser Ausführungsform verwendete Hebelsystem 9 mechanisch verbunden. Auf dem Schubelement ist das Backwarenhalteelement 27 angeordnet, in welchem die Backware B vorgehalten wird.

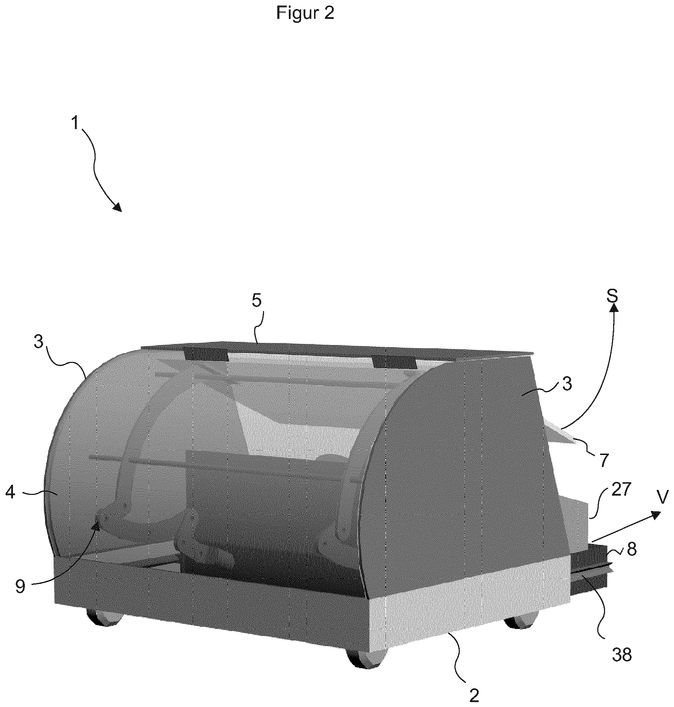

Figur 2 zeigt die Rückseite der Regalvorrichtung 1. Das Rückseitenelement 4 ist konvex gebogen ausgeführt. Die Seitenelemente 3 weisen eine komplementär zur Biegung des Rückseitenelements 4 ausgeführte Rundung auf. Das hier verwendete Hebelsystem 9, welches die Verschlussplatte 7 und das Schubelement 8 mechanisch verbindet, ist rückseitig am Schubelement 8 angeordnet, nahe dem Rückseitenelement 4.

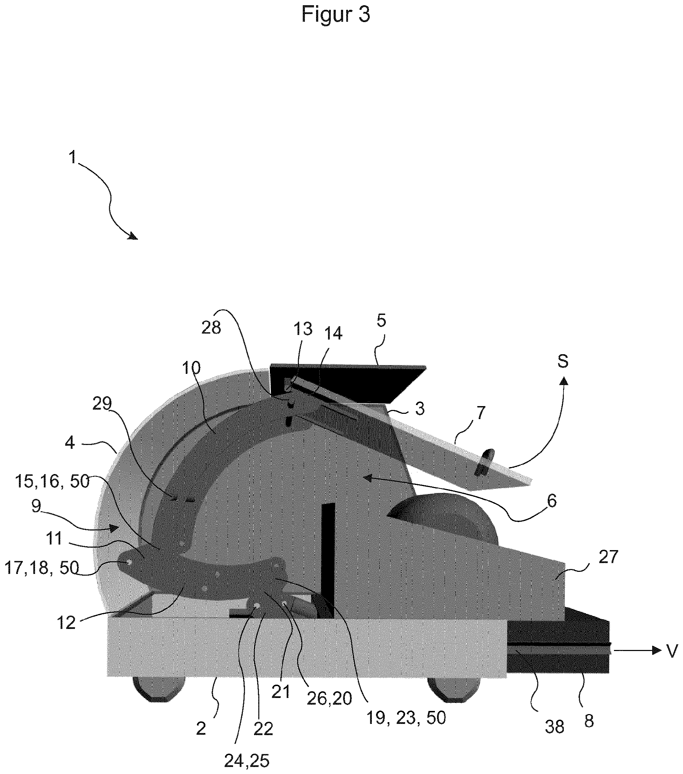

Figur 3 zeigt eine Detaildarstellung des Hebelsystems 9 in Seitenansicht. Für die bessere Sichtbarkeit wurde das linke Seitenelement 3 in dieser Ansicht weggelassen. Die Verschlussklappe 7 ist mit Scharnieren, welche in einer Drehachse 13 klappbar sind, am Deckenelement 5 befestigt. Am ersten Befestigungspunkt 14 sind sowohl die Scharniere an der Verschlussplatte 7 als auch das Hebelsystem 9 an der Verschlussplatte 7 befestigt. Das Hebelsystem 9 ist an einem zweiten Befestigungspunkt 20 am Schubelement 8 befestigt. Durch die Befestigung des Hebelsystem 9 an der Verschlussplatte 7 am ersten Befestigungspunkt 14 und am Schubelement 8 am zweiten Befestigungspunkt 20, ist die Verschlussplatte 7 mit dem Schubelement 8 mechanisch über das Hebelsystem 9 verbunden. Das Hebelsystem weist in dieser Ausführungsform fünf Hebel 10, 11, 12, 21, 22 auf. Bei Aufschwenken der Verschlussplatte in Schwenkrichtung S wird das Hebelsystem 9 betätigt und wandelt die Rotationsbewegung der Verschlussplatte 7 in eine Translationsbewegung des Schubelements 8 in Verschieberichtung V um. Das Schubelement 8 wird dabei auf den Schubschienenelementen 38 in Verschieberichtung V aus dem Raum der Regalvorrichtung 1 herausgeschoben. Für eine klemmfreie Funktion des Hebelsystems 9 sind zumindest drei Hebel 10, 11, 12 notwendig. Um das Hebelsystem 9 platzsparender an der Rückseite des Schubelements 8 anordnen zu können, sind fünf Hebel 10, 11, 12, 21, 22 vorteilhafter. Das Hebelsystem 9 ist so platzsparender betätigbar.

Der erste Hebel 10 ist starr mit der Verschlussplatte 7 am ersten Befestigungspunkt 14 verbunden, sodass eine Drehung der Verschlussplatte 7 um die Drehachse 13 in Schwenkrichtung S zu einer Drehung des ersten Hebels 10 um die Drehachse 13 in Schwenkrichtung S führt. Der erste Hebel 10 betätigt durch seine Drehung den zweiten, dritten, vierten und fünften Hebel 11, 12, 21, 22. Da sich der zweite Befestigungspunkt 20 translatorisch mit dem sich ausschiebenden Schubelement 8 bewegt, bewegen sich die Hebel zwei bis fünf 11, 12, 21, 22 sowohl translatorisch als auch rotatorisch. Die Rotation erfolgt dabei um gedachte, sich translatorisch bewegende Drehachsen. Durch das Verschwenken der Hebel 10, 11, 12, 21, 22 zueinander wird die Rotationsbewegung der Verschlussklappe 7 in eine Translationsbewegung des Schubelements 8 umgewandelt. Das Hebelsystem ist durch Zuschwenken der Verschlussplatte 7 in entgegengesetzter Weise betätigbar, sodass das Schubelement 8 entgegen der Verschieberichtung V in den Raum der Regalvorrichtung 1 hineingeschoben wird.

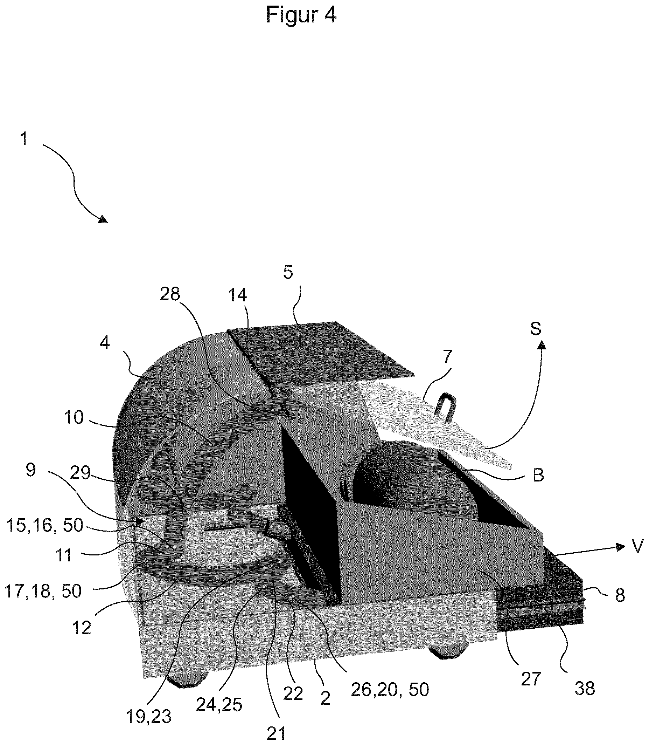

Figur 4 zeigt eine perspektivische Detaildarstellung des Hebelsystems 9. Das Hebelsystem 9 besteht in dieser Ausführungsform aus zwei Hebelreihen, also insgesamt aus zwei ersten Hebeln 10, zwei zweiten Hebeln 11, zwei dritten Hebeln 12, zwei vierten Hebeln 21 und zwei fünften Hebeln 22. Eine Hebelreihe umfasst dabei einen ersten, einen zweiten, einen dritten, einen vierten und einen fünften Hebel 10, 11 ,12 ,21, 22. Die jeweiligen Hebel einer Hebelreihe sind wie zuvor beschrieben miteinander verbunden und wirken wie zuvor beschrieben. Eine Hebelreihe ist nahe des linken Seitenelements 3 der Regalvorrichtung angeordnet und die andere Hebelreihe nahe des rechten Seitenelements 3. Beide Hebelreihen sind durch ein erstes und ein zweites Verbindungselement 28, 29 miteinander verbunden. In dieser Ausführungsform sind beide Verbindungselemente 28, 29 an den beiden ersten Hebeln angeordnet. Des Weiteren ist es aber ebenfalls denkbar die Verbindungselemente zwischen den beiden zweiten, den beiden dritten, den beiden vierten oder den beiden fünften Hebeln 11, 12, 21, 22 anzuordnen, oder auch die Verbindungselemente 28, 29 an unterschiedlichen Hebeln 10, 11, 12, 21, 22 anzuordnen, beispielsweise das erste Verbindungselement 28 an den ersten Hebeln 10 und das zweite Verbindungselement 29 an den dritten Hebeln 12. Die Verbindungselemente 28, 29 bewirken, dass beide Hebelreihen genau gleich betätigt werden und das Schubelement 8 beim Aus- oder Einfahren nicht verkanten kann.

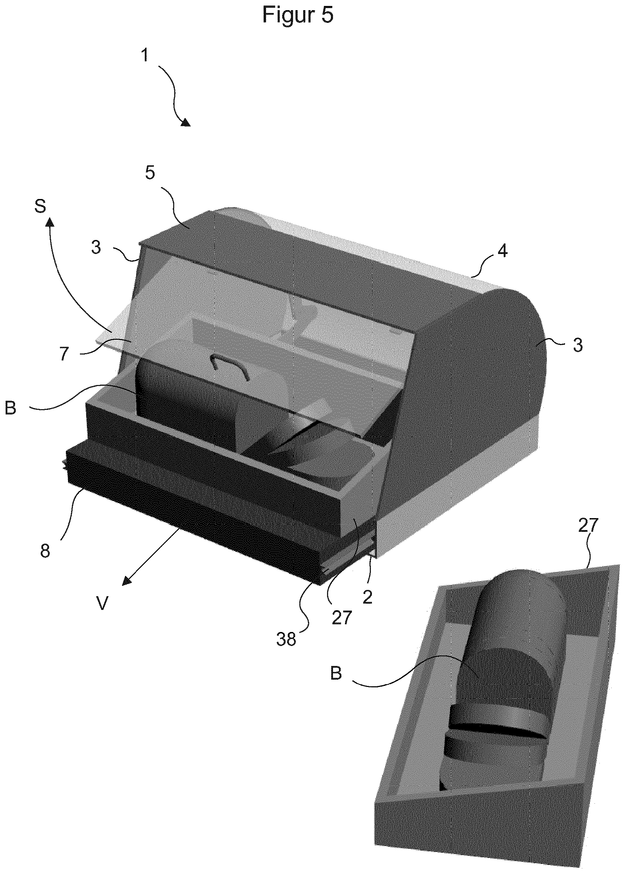

Figur 5 zeigt die Regalvorrichtung 1 in perspektivischer Darstellung mit einem zusätzlichen Backwarenhalteelement 27 mit einer zusätzlichen Backware B darin. Das Backwarenhalteelement 27 ist auf dem Schubelement 8 angeordnet und wird somit durch Bewegung des Schubelements 8 ebenfalls in gleichem Maße bewegt. Bei Öffnen der Verschlussplatte 7 wird daher das Schubelement 8 und das Backwarenhalteelement 27 aus dem Raum der Regalvorrichtung 1 herausgeschoben.

Das Backwarenhalteelement 27 in im aufgeschwenkten Zustand der Regalvorrichtung 1 schnell und einfach gegen ein anderes Backwarenhalteelement 27 austauschbar. Der Transport der Backwaren B zur Regalvorrichtung 1 kann daher bereits im Backwarenhalteelement 27 erfolgen, so dass ein Berühren der Backware für das Bestücken der Regalvorrichtung 1 mit Backwaren B nicht notwendig ist.

Bevorzugt ist das Backwarenhalteelement 27 als nach oben offener Kasten ausgeführt. Die Seitenwände hindern zum einen die Backwaren B am Herunterfallen, sowohl beim Bestücken der Regalvorrichtung 1 als auch beim Auf- und Zuschwenken der Regalvorrichtung 1. Zum anderen verhindern die Seitenwände ein Verteilen der Krümel, sodass die Regalvorrichtung 1 nicht verschmutzt wird. Bevorzugt ist die vordere, zur Öffnung 6 der Regalvorrichtung 1 ausgerichtete Seitenwand niedriger ausgeführt als die hintere, zum Rückseitenelement 4 ausgerichtete Seitenwand. Die zu den Seitenelementen 3 ausgerichteten Seitenwände verlaufen bevorzugt schräg. Durch die vorne niedrigere Seitenwand des Backwarenhaltelements 27 wird die Entnahme der Backware B im aufgeschwenkten Zustand der Regalvorrichtung 1 erleichtert.

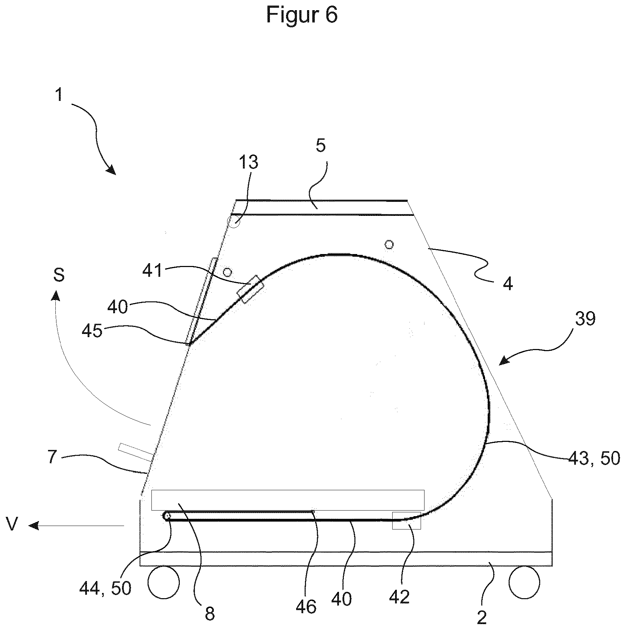

Figur 6 zeigt eine schematische Darstellung einer Ausführungsform des Seilzugsystems 39. Das Seilelement 40 ist mit einem ersten Ende am ersten Befestigungspunkt (45) an der Verschlussplatte 7 befestigt. Der erste Befestigungspunkt ist auf der oberen Hälfte der Verschlussplatte 7 angeordnet. Das Seilelement 40 ist einem Seilhüllenelement 43 geführt. Das Seilhüllenelement 43 ist nahe des Rückseitenelements 4 in vertikaler Richtung angeordnet und weist ein oberes und ein unteres Ende auf. Am oberen Ende ist ein erstes Endkappenelement 41 angeordnet, am unteren Ende ist ein zweites Endkappenelement 42 angeordnet. Bevorzugt ist das Seilhüllenelement 43 gebogen ausgeführt, sodass die beiden Enden mit ihrer Öffnung in Verschieberichtung V ausgerichtet sind. Das Seilelement tritt am ersten Endkappenelement 41 in das Seilhüllenelement 43 ein und am zweiten Endkappenelement 42 aus dem Seilhüllenelement 43 aus. Weitergehend verläuft das Seilelement 40 in Verschieberichtung V parallel zum Basiselement 2. Nahe des vorderen Endes des Basiselements, also nahe der Öffnung 6 ist das Umlenkrollenelement 44 angeordnet. Das Seilelement 40 wird über dem Umlenkrollenelement 44 geführt und verläuft im Anschluss entgegen der Verschieberichtung V oberhalb seines vorherigen Verlaufs. Das Seilelement 40 ist an seinem zweiten Ende auf der Unterseite des Schubelements 8 an einem zweiten Befestigungspunkt 46 befestigt.

Bei Aufschwenken der Verschlussplatte 7 in Verschwenkungsrichtung S wird das Seilelement 40, am ersten Endkappenelement 41 austretend und am zweiten Endkappenelement 42 eintretend, durch das Seilhüllenelement 43 bewegt. Der Teil des Seilelements 40, welcher unterhalb des Schubelements 8 angeordnet ist, wird somit durch das Aufschwenken der Verschlussplatte 7 verkürzt. Durch die Verkürzung bewegt sich der zweite Befestigungspunkt, und damit auch das Schubelement 8 in Verschieberichtung V auf das Umlenkrollenelement 44 zu, sodass bei Aufschwenken der Verschlussplatte 7 das Schubelement 8 aus dem Raum der Regalvorrichtung 1 herausgeschoben wird.

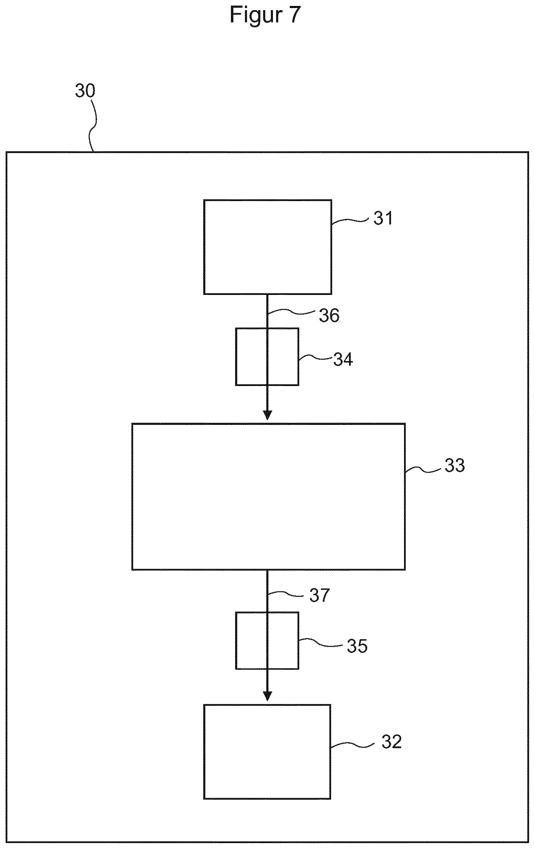

Figur 7 zeigt eine schematische Darstellung des elektronischen Steuerungssystems 30. Der Sensor 31 detektiert die Schwenkbewegung der Verschlussplatte 7 in Schwenkrichtung S und generiert dabei Sensorsignale 36. Die Sensorsignale 36 werden mit Hilfe der ersten Verbindungseinheit 34 an die Steuereinheit 33 übertragen. Bei Eingang von Sensorsignalen 36 ist in der Steuereinheit 33 ein Motorsteuersignal 37 generierbar. Dabei ist es denkbar, dass vor der Generation der Motorsteuersignale 37 eine Prüfung und Analyse der Sensorsignale 36 mit Hilfe der Steuereinheit 33 erfolgt. Dabei ist es beispielsweise möglich zwischen einer Bewegung der Verschlussplatte 7 in oder entgegen der Schwenkrichtung S zu unterscheiden. Dabei ist es denkbar, dass bei Eingang eines Sensorsignals 36, welches einem Aufschwenken der Verschlussplatte 7 in Schwenkrichtung S entspricht, ein anderes Motorsteuersignal erzeugbar ist, als bei Eingang eines Sensorsignals 36, welches einem Zuschwenken der Verschlussplatte 7 entgegen der Schwenkrichtung S entspricht. Das generierte Motorsteuersignal 37 wird mit Hilfe der zweiten Verbindungseinheit 35 an den Motor 32 übertragen, mit welchem das Schubelement in der Verschieberichtung V, oder auch entgegen dieser, verschiebbar ist.

### Bezugszeichenliste

- 1: Regalvorrichtung
- 2: Basiselement
- 3: Seitenelement
- 4: Rückseitenelement
- 5: Deckenelement
- 6: Öffnung
- 7: Verschlussplatte
- 8: Schubelement
- 9: Verbindungselement
- 10: erster Hebel
- 11: zweiter Hebel
- 12: dritter Hebel
- 13: Drehachse der Verschlussplatte
- 14: erster Befestigungspunkt
- 15: Endpunkt des ersten Hebels
- 16: Anfangspunkt des zweiten Hebels
- 17: Endpunkt des zweiten Hebels
- 18: Anfangspunkt des dritten Hebels
- 19: Endpunkt des dritten Hebels
- 20: zweiter Befestigungspunkt
- 21: vierter Hebel
- 22: fünfter Hebel
- 23: Anfangspunkt des vierten Hebels
- 24: Endpunkt des vierten Hebels
- 25: Anfangspunkt des fünften Hebels
- 26: Endpunkt des fünften Hebels
- 27: Backwarenhalteelement
- 28: erstes Verbindungselement
- 29: zweites Verbindungselement
- 30: elektronisches Steuerungssystem
- 31: Sensor
- 32: Motor
- 33: Steuerungseinheit
- 34: erste Verbindungseinheit
- 35: zweite Verbindungseinheit
- 36: Sensorsignale
- 37: Motorsteuersignale
- 38: Schubschienenelemente
- 39: Seilzugsystem
- 40: Seilelement
- 41: erstes Endkappenelement
- 42: zweites Endkappenelement
- 43: Seilhüllenelement
- 44: Umlenkrollenelement
- 45: erste Befestigungspunkt
- 46: zweiter Befestigungspunkt
- 50: Bewegungswandlungselement
- V: Verschieberichtung
- S: Schwenkrichtung
- B: Backware

## Patentansprüche

1. Regalvorrichtung (1) für Backwaren (B), insbesondere geschnittenes Brot, zur Bereitstellung von Backwaren (B), insbesondere im gastronomischen Bereich, wobei die Regalvorrichtung (1) eine Basisfläche (2), zumindest zwei Wandelemente (3), zumindest ein Rückseitenelement (4), zumindest ein Deckenelement (5), zumindest eine Öffnung (6) und zumindest einen Verschlussplatte (7) zum Verschließen der Öffnung (6) aufweist und die Wandelemente (3) zusammen mit dem Basiselement (2), dem Deckenelement (5) und dem Rückseitenelement (4) einen Raum aufspannen, in welchem die Backwaren (B) vorhaltbar sind, wobei die Regalvorrichtung (1) zumindest ein Schubelement (8), auf welchem die Backware (B) anordenbar ist, und zumindest ein Verbindungselement (9) und ein Bewegungswandlungselement (50) umfasst, wobei das Schubelement (8) mit der Verschlussplatte (7) durch das Verbindungselement (9) und das Bewegungswandlungselement (50) verbunden ist, so dass durch Aufschwenken der Verschlussplatte (7) in Verschwenkungsrichtung (S) das Verbindungselement (9) und das Bewegungswandlungselement (50) betätigbar sind und mit diesen die Drehbewegung der Verschlussplatte (7) in Verschwenkungsrichtung (S) in eine Schubbewegung des Schubelements (8) durch die Öffnung (6) der Regalvorrichtung (1) aus dem Raum der Regalvorrichtung (1) in einer Verschieberichtung (V) umwandelbar ist,
**dadurch gekennzeichnet, dass**
die als ebene Klappe ausgeführte Verschlussplatte (7) im aufgeschwenkten, geöffneten Zustand derart zu dem Schubelement (8) ausgerichtet ist, dass sie das Schubelement (8) in vertikaler Richtung vollumfänglich überdeckt, wobei die Verschlussplatte (7) dabei genau parallel zum Schubelement (8) oder in einem Winkel zum Schubelement (8) angeordnet ist und als Spuckschutz für die Backwaren (B) dient.

2. Regalvorrichtung (1) nach Anspruch 1,
**dadurch gekennzeichnet, dass**
das Verbindungselement (9) als Hebelsystem (9) mit zumindest einem ersten Hebel (10), zumindest einem zweiten Hebel (11) und zumindest einem dritten Hebel (12) ausgeführt ist und das Bewegungswandlungselement (50) als zumindest zwei Drehpunkte zwischen den drei Hebeln (10, 11, 12) des Hebelsystems (9) ausgeführt ist, sodass die Hebel (10, 11, 12) gegeneinander verschwenkbar sind, wobei das Schubelement (8) mit der Verschlussplatte (7) durch das Hebelsystem (9) verbunden ist, so dass durch Aufschwenken der Verschlussplatte (7) in Verschwenkungsrichtung (S) das Hebelsystem (9) betätigbar ist und mit diesem durch Verschwenkung der Hebel (10, 11, 12) zueinander das Schubelement (8) durch die Öffnung (6) der Regalvorrichtung (1) aus dem Raum der Regalvorrichtung (1) in einer Verschieberichtung (V) herausschiebbar ist.

3. Regalvorrichtung (1) nach Anspruch 1,
**dadurch gekennzeichnet, dass**
durch Zuschwenken der Verschlussplatte (7) entgegen der Verschwenkungsrichtung (S) das Verbindungselement (9) und das Bewegungswandlungselement (50) in entgegengesetzter Weise betätigbar sind so dass bei Zuschwenken der Verschlussplatte (7) entgegen der Verschwenkungsrichtung (S) das Schubelement (8) durch die Öffnung (6) der Regalvorrichtung (1) in den Raum der Regalvorrichtung (1) entgegen der Verschieberichtung (V) hineinschiebbar ist.

4. Regalvorrichtung (1) nach einem der vorherigen Ansprüche,
**dadurch gekennzeichnet, dass**
die Regalvorrichtung (1) eine Schließvorrichtung umfasst, welche eine Zeitverzögerungseinheit aufweist, mit welcher das Verbindungselement (9) und das Bewegungswandlungselement (50) automatisch in entgegengesetzter Weise betätigbar sind, sodass das Schubelement (8) durch die Öffnung (6) der Regalvorrichtung (1) in den Raum der Regalvorrichtung (1) entgegen der Verschieberichtung (V) hineinschiebbar ist und die Verschlussplatte (7) zuschwenkbar ist.

5. Regalvorrichtung (1) nach einem der vorherigen Ansprüche,
**dadurch gekennzeichnet, dass**
die Verschlussplatte (7) als Klappe ausgeführt ist, welche mittels einer Rotation in der Verschwenkungsrichtung (S) nach vorne-oben aufschwenkbar ist, wobei die Verschieberichtung (V) einer Bewegung nach vorne entspricht, und deren Drehachse (13) horizontal und quer zur Verschieberichtung (V) sowie im oberen Bereich der Klappe (7) angeordnet ist.

6. Regalvorrichtung (1) nach Anspruch 2,
**dadurch gekennzeichnet, dass**
ein Anfangspunkt (14) des ersten Hebels (10) an einem ersten Befestigungspunkt (14) im oberen Bereich der Verschlussplatte (7) befestigt ist, ein Endpunkt (15) des ersten Hebels (10) mit einem Anfangspunkt (16) des zweiten Hebels (11) drehbar verbunden ist, ein Endpunkt (17) des zweiten Hebels (11) mit einem Anfangspunkt (18) des dritten Hebels (12) drehbar verbunden ist und ein Endpunkt des dritten Hebels (19) drehbar an einem zweiten Befestigungspunkt (20) an der zum Rückseitenelement (4) ausgerichteten Seite des Schubelements (8) befestigt ist, wobei der erste, zweite und dritte Hebel (10, 11, 12) jeweils um eine fiktive Schwenkachse rotierbar sind, welche parallel zur Drehachse (13) der Verschlussplatte (7) angeordnet sind.

7. Regalvorrichtung (1) nach einem der vorherigen Ansprüche,
**dadurch gekennzeichnet, dass**
das Hebelsystem (9) zwei erste, zwei zweite und zwei dritte Hebel (10, 11, 12) umfasst, wobei die ersten Hebel (10) parallel zueinander ausgerichtet sind, mit ihrem jeweiligen Anfangspunkt (14) an jeweils einem ersten Befestigungspunkt (14) im oberen Bereich der Verschlussplatte (7) befestigt sind, die zweiten und dritten Hebel (11, 12) jeweils ebenfalls parallel zueinander ausgerichtet sind und die Endpunkte der zwei dritten Hebel (19) drehbar an jeweils einem zweiten Befestigungspunkt (20) an der zum Rückseitenelement (4) ausgerichteten Seite des Schubelements (8) befestigt sind.

8. Regalvorrichtung (1) nach einem der vorherigen Ansprüche,
**dadurch gekennzeichnet, dass**
das Hebelsystem (9) weiterhin zumindest einen vierten Hebel (21) und zumindest einen fünften Hebel (22) aufweist, wobei ein Anfangspunkt (23) des vierten Hebels (21) mit dem Endpunkt (19) des dritten Hebels (12) drehbar verbunden ist, ein Endpunkt (24) des vierten Hebels (21) mit einem Anfangspunkt (25) des fünften Hebels (22) drehbar verbunden ist und ein Endpunkt (26) des fünften Hebels (22) drehbar am zweiten Befestigungspunkt (20) des Schubelements (8) befestigt ist.

9. Regalvorrichtung (1) nach einem der vorherigen Ansprüche,
**dadurch gekennzeichnet, dass**
das Verbindungselement (9) als Seilzugsystem (39) ausgeführt ist, welches zumindest ein Seilelement (40) sowie zumindest einen ersten und zweiten Befestigungspunkt (45, 46) umfasst, und das Bewegungswandlungselement (50) als zumindest ein Seilhüllenelement (43) und zumindest ein Umlenkrollenelement (44) ausgeführt ist, wobei das Seilelement (40), welches am ersten Befestigungspunkt (45) im oberen Bereich an der Verschlussplatte (7) und am zweiten Befestigungspunkt (46) an der Unterseite des Schubelements (8) befestigt ist, in dem Seilhüllenelement, welches in vertikaler Richtung nahe dem Rückseitenelement (4) angeordnet ist, führbar ist und mit dem Umlenkrollenelement (44), welches im geschlossenen Zustand der Regalvorrichtung (1) nahe dem vorderen Ende der Unterseite des Schubelements (8) angeordnet ist, umlenkbar ist, sodass bei Aufschwenken der Verschlussplatte (7) in Verschwenkungsrichtung (S) das Seilelement (40) durch das Seilhüllenelement (43) in Richtung eines oberen Endes des Seilhüllenelements (43) bewegbar ist und, mit Hilfe des Umlenkrollenelements (44) und der Bewegung des Seilelements (40), das Schubelement (8) in Verschieberichtung (V) ausschiebbar ist.

10. Regalvorrichtung (1) nach einem der vorherigen Ansprüche,
**dadurch gekennzeichnet, dass**
an dem Schubelement (8) ein Backwarenhalteelement (27) anordenbar ist.

11. Regalvorrichtung (1) nach einem der vorherigen Ansprüche,
**dadurch gekennzeichnet, dass**
die Regalvorrichtung (1) eine Klimatisierungsvorrichtung umfasst.

12. Regalvorrichtung (1) nach einem der vorherigen Ansprüche,
**dadurch gekennzeichnet, dass**
die Regalvorrichtung (1) waagrechte und/oder senkrechte Trennwände umfasst, mit welchen der aufgespannte Raum in mehrere Teilräume aufteilbar ist und jeder Teilraum jeweils zumindest eine Öffnung (6) mit jeweils zumindest einer Verschlussplatte (7), zumindest ein Schubelement (8) sowie zumindest ein Verbindungselement (9) und ein Bewegungswandlungselement (50) aufweist, mit welchen jeder Teilraum einzeln öffen- und schließbar ist.

13. Verfahren zum Entnehmen von Backwaren (B), insbesondere geschnittenes Brot, aus einer Regalvorrichtung (1), wobei die Regalvorrichtung (1) eine Basisfläche (2), zumindest zwei Wandelemente (3), zumindest ein Rückseitenelement (4), zumindest ein Deckenelement (5), zumindest eine Öffnung (6) und zumindest eine Verschlussplatte (7) zum Verschließen der Öffnung (6) aufweist, die Wandelemente (3) zusammen mit dem Basiselement (2), dem Deckenelement (5) und dem Rückseitenelement (4) einen Raum aufspannen in welchem die Backwaren (B) vorhaltbar sind und die Regalvorrichtung (1) ein Schubelement (8), ein Verbindungselement (9) und ein Bewegungswandlungselement (50) umfasst, wobei die Backware (B) auf dem Schubelement (8) angeordnet ist, **umfassend die Schritte:**
- Aufschwenken der Verschlussplatte (7) der Öffnung (6) der Regalvorrichtung (1) in Verschwenkungsrichtung (S) mit, durch das Verbindungselement (9) und das Bewegungswandlungselement (50) bedingtem, gleichzeitigem Herausschieben des Schubelements (8) aus dem Raum der Regalvorrichtung (1);
- Entnehmen der am zuvor herausgeschobenen Schubelement (8) angeordneten Backware (B) oder Teilen der Backware (B), wobei die als ebene Klappe ausgeführte Verschlussplatte (7) im aufgeschwenkten, geöffneten Zustand derart zu dem Schubelement (8) ausgerichtet ist, dass sie das Schubelement (8) in vertikaler Richtung vollumfänglich überdeckt, wobei die Verschlussplatte (7) dabei genau parallel zum Schubelement (8) oder in einem Winkel zum Schubelement (8) angeordnet ist und als Spuckschutz für die Backwaren (B) dient;
- Zuschwenken der Verschlussplatte (7) der Öffnung (6) der Regalvorrichtung (1) entgegen der Verschwenkungsrichtung (S) mit durch das Verbindungselement (9) und das Bewegungswandlungselement (50) bedingtem, gleichzeitigem Hineinschieben des Schubelements (8) in den Raum der Regalvorrichtung (1).

14. Verfahren nach Anspruch 13,
**dadurch gekennzeichnet, dass**
die Regalvorrichtung (1) weiterhin eine Schließvorrichtung aufweist und an Stelle des letzten Verfahrensschritts die Schließvorrichtung das Verbindungselement (9) und das Bewegungswandlungselement (50) automatisch in entgegengesetzter Weise betätigt mit dadurch bedingtem, gleichzeitigen Zuschwenken der Verschlussplatte (7) sowie gleichzeitigem Hineinschieben des Schubelements (8) in den Raum der Regalvorrichtung (1).

## Claims

1. Shelf device (1) for bakery products (B), in particular sliced bread, for provision of bakery products (B), in particular in the gastronomic sector, wherein the shelf device (1) comprises a base surface (2), at least two wall elements (3), at least one rear element (4), at least one cover element (5), at least one opening (6), and at least one closing plate (7) for closing the opening (6), and the wall elements (3) together with the base element (2), cover element (5) and rear element (4) span a space in which the bakery products (B) can be arranged; wherein the shelf device (1) comprises at least one sliding element (8) on which the bakery product (B) can be arranged, and at least one connecting element (9) and a movement conversion element (50); wherein the sliding element (8) is connected to the closing plate (7) by the connecting element (9) and the movement conversion element (50) so that by open-pivoting of the closing plate (7) in the pivot direction (S), the connecting element (9) and the movement conversion element (50) can be actuated and thereby the rotational movement of the closing plate (7) in the pivot direction (S) can be converted into a sliding movement of the sliding element (8) from the space of the shelf device (1) through the opening (6) of the shelf device (1) in a displacement direction (V);
**characterised in that**
the closing plate (7) is configured as a flat flap and in the open-pivoted, opened state is oriented relative to the sliding tray element (8) such that it completely covers the sliding tray element (8) in the vertical direction, wherein the closing plate (7) is arranged exactly parallel, or at an angle to the sliding element (8) and serves as spittle protection for the bakery products (B).

2. Shelf device (1) according to claim 1,
**characterised in that**
the connecting element (9) is configured as a lever system (9) with at least one first lever (10), at least one second lever (11) and at least one third lever (12), and the movement conversion element (50) is configured as at least two rotational points between the three levers (10, 11, 12) of the lever system (9) so that the levers (10, 11, 12) can be pivoted relative to one another, wherein the sliding element (8) is connected to the closing plate (7) by the lever system (9) so that by open-pivoting of the closing plate (7) in the pivot direction (S), the lever system (9) can be actuated and thereby, by pivoting the levers (10, 11, 12) relative to one another, the sliding element (8) can slide out from the space of the shelf device (1) through the opening (6) of the shelf device (1) in a displacement direction (V).

3. Shelf device (1) according to claim 1,
**characterised in that**
by close-pivoting of the closing plate (7) against the pivot direction (S), the connecting element (9) and the movement conversion element (50) can be actuated in the opposite way, so that on close-pivoting of the closing plate (7) against the pivot direction (S), the sliding element (8) can slide back into the space of the shelf device (1) through the opening (6) of the shelf device (1) against the displacement direction (V).

4. Shelf device (1) according to any of the preceding claims,
**characterised in that**
the shelf device (1) comprises a closing device with a time delay unit, by means of which the connecting element (9) and the movement conversion element (50) can be actuated automatically in the opposite way so that the sliding element (8) can slide back into the space of the shelf device (1) through the opening (6) of the shelf device (1) against the displacement direction (V) and the closing plate (7) can be pivoted closed.

5. Shelf device (1) according to any of the preceding claims,
**characterised in that**
the closing plate (7) is configured as a flap which can be open-pivoted in the forward-upward direction by means of a rotation in the pivot direction (S), wherein the displacement direction (V) corresponds to a forward movement, and its rotational axis (13) is arranged horizontally and transversely to the displacement direction (V) and in the upper region of the flap (7).

6. Shelf device (1) according to claim 2,
**characterised in that**
a starting point (14) of the first lever (10) is attached to a first fixing point (14) in the upper region of the closing plate (7), an end point (15) of the first lever (10) is rotatably connected to a starting point (16) of the second lever (11), an end point (17) of the second lever (11) is rotatably connected to a starting point (18) of the third lever (12), and an end point of the third lever (19) is rotatably attached to a second fixing point (20) on the side of the sliding element (8) oriented towards the rear element (4), wherein the first, second and third levers (10, 11, 12) are each rotatable around a respective theoretical pivot axis that is arranged parallel to the rotational axis (13) of the closing plate (7).

7. Shelf device (1) according to any of the preceding claims,
**characterised in that**
the lever system (9) comprises two first, two second and two third levers (10, 11, 12), wherein the first levers (10) are oriented parallel to one another and attached by their respective starting point (14) to a respective first fixing point (14) in the upper region of the closing plate (7), the second and third levers (11, 12) are respectively oriented parallel to one another and the end points of the two second levers (19) are rotatably attached to a respective second fixing point (20) on the side of the sliding element (8) oriented towards the rear element (4).

8. Shelf device (1) according to any of the preceding claims,
**characterised in that**
the lever system (9) furthermore comprises at least one fourth lever (21) and at least one fifth lever (22), wherein a starting point (23) of the fourth lever (21) is rotatably connected to the end point (19) of the third lever (12), an end point (24) of the fourth lever (21) is rotatably connected to a starting point (25) of the fifth lever (22), and an end point (26) of the fifth lever (22) is rotatably attached to the second fixing point (20) of the sliding element (8).

9. Shelf device (1) according to any of the preceding claims,
**characterised in that**
the connecting element (9) is configured as a cable-pull system (39) comprising at least one cable element (40) and at least one first and second fixing point (45, 46), and the movement conversion element (50) is configured as at least one cable sleeve element (43) and at least one deflecting roller element (44); wherein the cable element (40), which is attached to the first fixing point (45) in the upper region of the closing plate (7) and to the second fixing point (46) on the underside of the sliding element (8), can be guided in the cable sleeve element, which is arranged close to the rear element (4) in vertical direction, and can be deflected by means of the deflecting roller element (44), which is arranged close to the front end of the underside of the sliding element (8) when the shelf device (1) is in the closed state, so that when the closing plate (7) is open-pivoted in the pivot direction (S), the cable element (40) can be moved through the cable sleeve element (43) in the direction of an upper end of the cable sleeve element (43), and by means of the deflecting roller element (44) and the movement of the cable element (40), the sliding tray element (8) can slide out in the displacement direction (V).

10. Shelf device (1) according to any of the preceding claims,
**characterised in that**
a bakery product holding element (27) can be arranged on the sliding element (8).

11. Shelf device (1) according to any of the preceding claims,
**characterised in that**
the shelf device (1) comprises a climate control device.

12. Shelf device (1) according to any of the preceding claims,
**characterised in that**
the shelf device (1) comprises horizontal and/or vertical partition walls which can divide the spanned space into several part spaces, and each part space comprises at least one opening (6) with respectively at least one closing plate (7), at least one sliding element (8) and at least one connecting element (9) and a movement conversion element (50), by means of which each part space can be opened and closed individually.

13. Method for extracting bakery products (B), in particular sliced bread, from a shelf device (1), wherein the shelf device (1) comprises a base surface (2), at least two wall elements (3), at least one rear element (4), at least one cover element (5), at least one opening (6), and at least one closing plate (7) for closing the opening (6), the wall elements (3) together with the base element (2), the cover element (5) and the rear element (4) span a space in which the bakery products (B) can be arranged, and the shelf device (1) comprises a sliding element (8), a connecting element (9) and a movement conversion element (50), wherein the bakery product (B) is arranged on the sliding element (8),
comprising the steps:
- open-pivoting of the closing plate (7) of the opening (6) of the shelf device (1) in the pivot direction (S), with simultaneous out-sliding of the sliding element (8) from the space of the shelf device (1) under the action of the connecting element (9) and the movement conversion element (50);
- removal of the bakery product (B) or parts of the bakery product (B) arranged on the previously withdrawn sliding element (8), wherein the closing plate (7) is configured as a flat flap and in the open-pivoted, opened state is oriented relative to the sliding element (8) such that it completely covers the sliding element (8) in the vertical direction, wherein the closing plate (7) is arranged exactly parallel to the sliding element (8) or at an angle to the sliding element (8) and serves as spittle protection for the bakery products (B);
- closed-pivoting of the closing plate (7) of the opening (6) of the shelf device (1) against the pivot direction (S) with simultaneous return of the sliding element (8) into the space of the shelf device (1) under the action of the connecting element (9) and the movement conversion element (50).

14. Method according to claim 13,
**characterised in that**
the shelf device (1) furthermore comprises a closing device, and instead of the last method step, the closing device automatically actuates the connecting element (9) and the movement conversion element (50) in the opposite way, with thereby induced simultaneous closed-pivoting of the closing plate (7) and simultaneous return of the sliding element (8) into the space of the shelf device (1).

## Revendications

1. Dispositif de rayonnage (1) pour produits de boulangerie (B), en particulier du pain tranché, pour la fourniture de produits de boulangerie (B), en particulier dans le domaine gastronomique, dans lequel le dispositif de rayonnage (1) présente une surface de base (2), au moins deux éléments paroi (3), au moins un élément face arrière (4), au moins un élément plafond (5), au moins une ouverture (6) et au moins une plaque de fermeture (7) pour la fermeture de l'ouverture (6) et les éléments paroi (3) définissent conjointement avec l'élément de base (2), l'élément plafond (5) et l'élément face arrière (4) un espace dans lequel les produits de boulangerie (B) peuvent être conservés, dans lequel le dispositif de rayonnage (1) comprend au moins un élément coulissant (8), sur lequel le produit de boulangerie (B) peut être disposé, et au moins un élément de liaison (9) et un élément de conversion de mouvement (50), dans lequel l'élément coulissant (8) est relié à la plaque de fermeture (7) par l'élément de liaison (9) et l'élément de conversion de mouvement (50), de sorte que l'élément de liaison (9) et l'élément de conversion de mouvement (50) peuvent être actionnés par ouverture par pivotement de la plaque de fermeture (7) dans la direction de pivotement (S) et, avec ceux-ci, le mouvement de rotation de la plaque de fermeture (7) dans la direction de pivotement (S) peut être converti en un mouvement de coulissement de l'élément coulissant (8) à travers l'ouverture (6) du dispositif de rayonnage (1) à l'extérieur de l'espace du dispositif de rayonnage (1) dans une direction de coulissement (V),
**caractérisé en ce que**
la plaque de fermeture (7) réalisée sous la forme d'un clapet plat, dans l'état pivoté ouvert, est orientée par rapport à l'élément coulissant (8) de telle sorte qu'elle recouvre entièrement l'élément coulissant (8) dans la direction verticale, dans lequel la plaque de fermeture (7) est ainsi disposée exactement parallèlement à l'élément coulissant (8) ou selon un angle par rapport à l'élément coulissant (8) et sert à protéger les produits de boulangerie (B) des postillons.

2. Dispositif de rayonnage (1) selon la revendication 1,
**caractérisé en ce que**
l'élément de liaison (9) est réalisé sous la forme d'un système de leviers (9) avec au moins un premier levier (10), au moins un deuxième levier (11) et au moins un troisième levier (12) et l'élément de conversion de mouvement (50) est réalisé sous la forme d'au moins trois points de rotation entre les trois leviers (10, 11, 12) du système de leviers (9), de sorte que les leviers (10, 11, 12) peuvent pivoter les uns par rapport aux autres, dans lequel l'élément coulissant (8) est relié à la plaque de fermeture (7) par le système de leviers (9), de sorte que le système de leviers (9) peut être actionné par ouverture par pivotement de la plaque de fermeture (7) dans la direction de pivotement (S) et, avec celui-ci, par pivotement des leviers (10, 11, 12) les uns par rapport aux autres, l'élément coulissant (8) peut sortir par coulissement de l'espace du dispositif de rayonnage (1) dans une direction de coulissement (V) à travers l'ouverture (6) du dispositif de rayonnage (1).

3. Dispositif de rayonnage (1) selon la revendication 1,
**caractérisé en ce que**
l'élément de liaison (9) et l'élément de conversion de mouvement (50) peuvent être actionnés de manière opposée par fermeture par pivotement de la plaque de fermeture (7) à l'encontre de la direction de pivotement (S), de sorte que, lors de la fermeture par pivotement de la plaque de fermeture (7) à l'encontre de la direction de pivotement (S), l'élément coulissant (8) peut entrer par coulissement à l'intérieur de l'espace du dispositif de rayonnage (1) à l'encontre de la direction de coulissement (V) à travers l'ouverture (6) du dispositif de rayonnage (1).

4. Dispositif de rayonnage (1) selon l'une quelconque des revendications précédentes,
**caractérisé en ce que**
le dispositif de rayonnage (1) comprend un dispositif de fermeture, lequel présente une unité de temporisation, avec laquelle l'élément de liaison (9) et l'élément de conversion de mouvement (50) peuvent être actionnés automatiquement de manière opposée, de sorte que l'élément coulissant (8) peut entrer par coulissement à l'intérieur de l'espace du dispositif de rayonnage (1) à l'encontre de la direction de coulissement (V) à travers l'ouverture (6) du dispositif de rayonnage (1) et la plaque de fermeture (7) peut être fermée par pivotement.

5. Dispositif de rayonnage (1) selon l'une quelconque des revendications précédentes,
**caractérisé en ce que**
la plaque de fermeture (7) est réalisée sous la forme d'un clapet, lequel peut être ouvert par pivotement vers l'avant-le haut au moyen d'une rotation dans la direction de pivotement (S), dans lequel la direction de coulissement (V) correspond à un mouvement vers l'avant, et dont l'axe de rotation (13) est disposé horizontalement et transversalement par rapport à la direction de coulissement (V) ainsi que dans la zone supérieure du clapet (7).

6. Dispositif de rayonnage (1) selon la revendication 2,
**caractérisé en ce que**
un point initial (14) du premier levier (10) est fixé sur un premier point de fixation (14) dans la zone supérieure de la plaque de fermeture (7), un point final (15) du premier levier (10) est relié de manière rotative à un point initial (16) du deuxième levier (11), un point final (17) du deuxième levier (11) est relié de manière rotative à un point initial (18) du troisième levier (12) et un point final du troisième levier (19) est fixé de manière rotative sur un deuxième point de fixation (20) sur la face de l'élément coulissant (8) orientée vers l'élément face arrière (4), dans lequel les premier, deuxième et troisième leviers (10, 11, 12) peuvent tourner respectivement autour d'un axe de pivotement fictif, lesquels sont disposés parallèlement à l'axe de rotation (13) de la plaque de fermeture (7).

7. Dispositif de rayonnage (1) selon l'une quelconque des revendications précédentes,
**caractérisé en ce que**
le système de leviers (9) comprend deux premiers, deux deuxièmes et deux troisièmes leviers (10, 11, 12), dans lequel les premiers leviers (10) sont orientés parallèlement l'un à l'autre, avec leur point initial (14) respectif sur respectivement un premier point de fixation (14) dans la zone supérieure de la plaque de fermeture (7), les deuxièmes et troisièmes leviers (11, 12) sont orientés respectivement également parallèlement les uns aux autres et les points finaux des deux troisièmes leviers (19) sont fixés de manière rotative sur respectivement un deuxième point de fixation (20) sur la face de l'élément coulissant (8) orientée vers l'élément face arrière (4).

8. Dispositif de rayonnage (1) selon l'une quelconque des revendications précédentes,
**caractérisé en ce que**
le système de leviers (9) présente en outre au moins un quatrième levier (21) et au moins un cinquième levier (22), dans lequel un point initial (23) du quatrième levier (21) est relié de manière rotative au point final (19) du troisième levier (12), un point final (24) du quatrième levier (21) est relié de manière rotative à un point initial (25) du cinquième levier (22) et un point final (26) du cinquième levier (22) est fixé de manière rotative sur le deuxième point de fixation (20) de l'élément coulissant (8).

9. Dispositif de rayonnage (1) selon l'une quelconque des revendications précédentes,
**caractérisé en ce que**
l'élément de liaison (9) est réalisé sous la forme d'un système de câble de traction (39), lequel comprend au moins un élément câble (40) ainsi qu'au moins un premier et deuxième point de fixation (45, 46), et l'élément de conversion de mouvement (50) est réalisé sous la forme d'au moins un élément gaine de câble (43) et d'au moins un élément poulie de renvoi (44), dans lequel l'élément câble (40), lequel est fixé sur le premier point de fixation (45) dans la zone supérieure sur la plaque de fermeture (7) et sur le deuxième point de fixation (46) sur la face inférieure de l'élément coulissant (8), peut être guidé dans l'élément gaine de câble, lequel est disposé dans la direction verticale à proximité de l'élément face arrière (4), et peut être renvoyé avec l'élément poulie de renvoi (44), lequel, dans l'état fermé du dispositif de rayonnage (1), est disposé à proximité de l'extrémité avant de la face inférieure de l'élément coulissant (8), de sorte que, lors de l'ouverture par pivotement de la plaque de fermeture (7) dans la direction de pivotement (S), l'élément câble (40) peut être déplacé par l'élément gaine de câble (43) en direction d'une extrémité supérieure de l'élément gaine de câble (43) et, à l'aide de l'élément poulie de renvoi (44) et du mouvement de l'élément câble (40), l'élément coulissant (8) peut sortir par coulissement dans la direction de coulissement (V).

10. Dispositif de rayonnage (1) selon l'une quelconque des revendications précédentes,
**caractérisé en ce que**
un élément de retenue de produits de boulangerie (27) peut être disposé sur l'élément coulissant (8).

11. Dispositif de rayonnage (1) selon l'une quelconque des revendications précédentes,
**caractérisé en ce que**
le dispositif de rayonnage (1) comprend un dispositif de climatisation.

12. Dispositif de rayonnage (1) selon l'une quelconque des revendications précédentes,
**caractérisé en ce que**
le dispositif de rayonnage (1) comprend des cloisons horizontales et/ou verticales, avec lesquelles l'espace défini peut être divisé en plusieurs espaces partiels et chaque espace partiel présente respectivement au moins une ouverture (6) avec respectivement au moins une plaque de fermeture (7), au moins un élément coulissant (8) ainsi qu'au moins un élément de liaison (9) et un élément de conversion de mouvement (50), avec lesquels chaque espace partiel peut être ouvert et fermé individuellement.

13. Procédé pour prélever des produits de boulangerie (B), en particulier du pain tranché, d'un dispositif de rayonnage (1), dans lequel le dispositif de rayonnage (1) présente une surface de base (2), au moins deux éléments paroi (3), au moins un élément face arrière (4), au moins un élément plafond (5), au moins une ouverture (6) et au moins une plaque de fermeture (7) pour la fermeture de l'ouverture (6), les éléments paroi (3) définissent conjointement avec l'élément de base (2), l'élément plafond (5) et l'élément face arrière (4) un espace dans lequel les produits de boulangerie (B) peuvent être conservés et le dispositif de rayonnage (1) comprend un élément coulissant (8), un élément de liaison (9) et un élément de conversion de mouvement (50), dans lequel le produit de boulangerie (B) est disposé sur l'élément coulissant (8), comprenant les étapes :
- d'ouverture par pivotement de la plaque de fermeture (7) de l'ouverture (6) du dispositif de rayonnage (1) dans la direction de pivotement (S) avec la sortie simultanée par coulissement de l'élément coulissant (8) de l'espace du dispositif de rayonnage (1), provoquée par l'élément de liaison (9) et l'élément de conversion de mouvement (50) ;
- de prélèvement du produit de boulangerie (B) ou de parties du produit de boulangerie (B) disposé(es) sur l'élément coulissant (8) préalablement sorti par coulissement, dans lequel la plaque de fermeture (7) réalisée sous la forme d'un clapet plat, dans l'état ouvert par pivotement, est orientée par rapport à l'élément coulissant (8) de telle sorte qu'elle recouvre entièrement l'élément coulissant (8) dans la direction verticale, dans lequel la plaque de fermeture (7) est disposée ainsi exactement parallèlement à l'élément coulissant (8) ou selon un angle par rapport à l'élément coulissant (8) et sert à protéger les produits de boulangerie (B) des postillons ;
- de fermeture par pivotement de la plaque de fermeture (7) de l'ouverture (6) du dispositif de rayonnage (1) à l'encontre de la direction de pivotement (S) avec l'entrée simultanée par coulissement de l'élément coulissant (8) à l'intérieur de l'espace du dispositif de rayonnage (1) provoquée par l'élément de liaison (9) et l'élément de conversion de mouvement (50).

14. Procédé selon la revendication 13,
**caractérisé en ce que**
le dispositif de rayonnage (1) présente en outre un dispositif de fermeture et, au lieu de la dernière étape de procédé, le dispositif de fermeture actionne l'élément de liaison (9) et l'élément de conversion de mouvement (50) automatiquement de manière opposée avec la fermeture par pivotement simultanée de la plaque de fermeture (7) provoquée de cette manière, ainsi que l'entrée simultanée par coulissement de l'élément coulissant (8) à l'intérieur de l'espace du dispositif de rayonnage (1).
